# EUROPÄISCHE PATENTANMELDUNG

(11) **EP 4 332 831 A1**
(43) Veröffentlichungstag der Anmeldung: **06.03.2024**
(21) Anmeldenummer: 22193550.5
(22) Anmeldetag: 01.09.2022
(51) Int. Cl.: G06K 7/14, G06K 19/06, B21C 51/00, G06F 3/00, G09F 3/00

(54) **FLACHMETALLPRODUKT MIT POSITIONSCODE-MUSTER**

(71) Anmelder: voestalpine Stahl GmbH, 4020 Linz (AT)
(72) Erfinder: GSTÖTTENBAUER, Norbert, 4209 Engerwitzdorf (AT)
(74) Vertreter: Lambsdorff & Lange Patentanwälte Partnerschaft mbB

(57) **Zusammenfassung**

Es wird ein Flachmetallprodukt (100) beschrieben, das an wenigstens einer Flachseite (100A) mit einem Positionscode-Muster aus einer Anordnung von verteilten Punkten versehen ist.

## Beschreibung

Die Erfindung betrifft ein Flachmetallprodukt, das an wenigstens einer Flachseite mit einer einen Code enthaltenden Markierung versehen ist.

Es ist bekannt, Produktmarkierungen auf Flachmetallprodukten in Form von Etiketten, Stickern oder optisch lesbaren Codes (z.B. QR-Codes oder Bar-Codes) anzubringen, die das Produkt identifizieren.

Derartige Markierungen können sich vom Produkt lösen, sind als diskrete Markierungen nur an bestimmten Stellen vorhanden und sind aufgrund ihrer Sichtbarkeit am Produkt häufig störend. Außerdem können sie über die Lebensdauer des Produktes unlesbar werden.

Aus EP 3 562 603 A1 ist ein Coil aus einem aufgewickelten Metallband bekannt, das auf einer Flachseite mit einer Markierung in Form einer Informationsspur versehen ist. Die Informationsspur ermöglicht es, einen von einem Coil abgetrennten Bandabschnitt dem Coil zuzuordnen und die Position des abgetrennten Bandabschnitts im Coil zu ermitteln.

Eine der Erfindung zugrunde liegende Aufgabenstellung kann darin gesehen werden, eine andere Metallbandmarkierung zu schaffen. Insbesondere sollen Nachteile der bisher bekannten Metallbandmarkierungen überwunden werden. Ferner zielt die Erfindung darauf ab, Verfahren zur Bereitstellung und/oder zum Abruf von Information basierend auf einer Metallbandmarkierung anzugeben.

Die der Erfindung zugrunde liegende Aufgabenstellung wird durch die Merkmale der unabhängigen Ansprüche gelöst. Ausführungsbeispiele und Weiterbildungen sind Gegenstand der abhängigen Ansprüche.

Demnach wird ein Flachmetallprodukt an wenigstens einer Flachseite mit einem Positionscode-Muster aus einer Anordnung von verteilten Punkten versehen.

Punktemarkierungen können so aufgebracht werden, dass sie für den Betrachter oder Endkunden unsichtbar oder kaum sichtbar sind. Somit ermöglicht die Verwendung von Punkten als Markierungen auch die Aufbringung des Positionscode-Musters auf einer Sichtseite des Flachmetallprodukts, ohne störend in Erscheinung zu treten. Ferner können, wie im Folgenden noch näher beschrieben wird, großflächige Bereiche oder die gesamte Flachseite des Flachmetallproduktes mit dem Positionscode-Muster versehen sein, so dass auch an aus dem Flachmetallprodukt zugeschnittenen oder ausgestanzten Bauteilen das Positionscode-Muster bzw. ein Teil desselben noch vorhanden sein kann. Dabei können die Punkte kreisförmig sein, es sind jedoch sämtliche andere Formen wie z.B. Rechtecke oder Quadrate möglich.

Darüber hinaus bleibt das Positionscode-Muster erfassbar und decodierbar, auch wenn ein Teil des Flachmetallprodukts, z.B. durch Einbau, abgedeckt wird oder das Flachmetallprodukt einer Umformung unterzogen wird. Das Positionscode-Muster kann eine hohe Beständigkeit gegenüber Alterung aufweisen und kann - anders als Etikette oder Sticker - unlösbar mit dem Flachmetallprodukt verbunden sein.

Ein Positionscode-Muster als Produktmarkierung ermöglicht darüber hinaus die Bereitstellung und/oder den Abruf vielfältigster Informationen, die entweder vom Hersteller des Flachmetallproduktes oder vom Kunden oder Nutzer dem Flachmetallprodukt zugeordnet werden können.

Bei dem Flachmetallprodukt kann es sich beispielsweise um ein Metallband oder eine Metallplatine oder um ein wenigstens eine Metallplatine und eine weitere Materiallage enthaltendes Bauteil handeln. Insbesondere können mehrlagige Sandwich-Paneele oder Hybridbauteile (die z.B. aus einem geformten Blechbauteil und einem daran angebrachten faserverstärkten Kunststoffmaterial aufgebaut sind) Anwendung finden.

Das Flachmetallprodukt kann an der mit dem Positionscode-Muster versehenen Flachseite eine Beschichtung aufweisen. Dabei ist es möglich, dass das Positionscode-Muster in der Beschichtung realisiert ist oder auf die Beschichtung aufgebracht ist. Ferner besteht die Möglichkeit, das Positionscode-Muster als Strukturmuster (z.B. in Form eines Punkte-Reliefs) unterhalb der Beschichtung zu realisieren, wobei es durch die Beschichtung hindurch erfassbar ist.

Die Punkte können beispielsweise durch einen Druckprozess, d.h. einem Bedrucken des Flachmetallproduktes mit der Anordnung verteilter Punkte, aufgebracht sein.

Bei einer im Wesentlichen ganzflächigen Aufbringung des Positionscode-Musters auf die Flachseite des Flachmetallproduktes sind auch bei einer Zerkleinerung des Flachmetallproduktes noch Teile mit dem Positionscode versehen. Dies ermöglicht es, die dem Positionscode-Muster zugeordnete Information auch noch an Teilen (z.B. Zuschnitten oder Schrottteilen) des Flachmetallproduktes zu ermitteln. Ferner ist die Alterungsbeständigkeit erhöht, da bei einem großflächigen oder im Wesentlichen ganzflächigen Vorhandensein des Positionscode-Musters die Wahrscheinlichkeit, dass nach einer alterungsbedingten verschlechterten Erfassbarkeit des Musters noch Teilbereiche des Positionscode-Musters intakt sind, erhöht ist.

Die Anordnung von verteilten Punkten kann einen nominalen Rasterabstand von gleich oder mehr als 0,1 cm, 0,5 cm, 1 cm, 2 cm oder 5 cm aufweisen, d.h., es kann im Vergleich zu bekannten Positionscode-Mustern aus einer Anordnung von verteilten Punkten ein gegebenenfalls wesentlich größerer Rasterabstand gewählt werden.

Das Positionscode-Muster kann das Flachmetallprodukt eindeutig codieren. Insbesondere kann das Positionscode-Muster das Flachmetallprodukt eindeutig identifizierbar machen und/oder weitere Angaben über das Flachmetallprodukt, wie insbesondere Daten des Herstellungsprozesses, der Materialien, deren chemischen Zusammensetzungen, Logistikdaten, Einbaudaten, Daten bezüglich der Wartungshistorie, Recyclingdaten des Flachmetallproduktes oder Daten zu Marketingzwecken enthalten. Insbesondere kann das Positionscode-Muster so ausgeführt sein, dass aus einem Metallband gefertigte Flachmetallprodukte einzeln identifiziert werden und/oder eindeutig der ursprünglichen Position des Flachmetallproduktes im Metallband zugeordnet werden.

Das Positionscode-Muster kann wenigstens eine Position auf einer imaginären Oberfläche codieren. Durch die Erfassung des Positionscode-Musters kann diese Position decodiert und Information, die mit der decodierten Position verknüpft ist, abgerufen werden.

Das Positionscode-Muster kann in der Form gebildet sein, dass die Abstände benachbarter Punkte variieren und die Variation der Abstände einer Mehrzahl benachbarter Punkte eindeutig die Position auf der imaginären Oberfläche codiert.

Ferner wird ein Verfahren zum Abrufen von Information im Zusammenhang mit einem Flachmetallprodukt angegeben, in welchem eine Flachseite des Flachmetallproduktes mit einem Positionscode-Muster aus einer Anordnung von verteilten Punkten versehen wird. Zur Ermittlung einer Position auf einer imaginären Oberfläche wird wenigstens ein Teil des Positionscode-Musters erfasst und decodiert. Das Verfahren umfasst ferner das Abrufen von Information, die der ermittelten Position zugeordnet ist.

Beispielsweise kann das Erfassen des wenigstens einen Teils des Positionscode-Musters optisch mittels einer Kamera oder eines Lesegerätes vorgenommen werden. Das Decodieren des erfassten Teils des Positionscode-Musters kann mittels einer Anwendungssoftware des Lesegerätes ausgeführt werden. Beispielsweise kann es sich bei dem Lesegerät um ein Mobilgerät, insbesondere ein Smartphone oder einen Tablet-Computer handeln.

Neben den bereits genannten Angaben über das Flachmetallprodukt, die in der abgerufenen Information enthalten sein können, kann die abgerufene Information auch Angaben zum Verwendungszweck und/oder Einsatzort des Flachmetallproduktes und/oder vom Nutzer des Flachmetallproduktes bereitgestellte Information enthalten. Diese Information kann, aber muss nicht vom Hersteller des Flachmetallproduktes dem Positionscode-Muster zugeordnet werden. Es ist auch möglich, dass z.B. der Verwendungszweck und/oder der Einsatzort des Flachmetallproduktes vom Nutzer des Flachmetallproduktes (z.B. vom Kunden des Herstellers) dem Positionscode-Muster zugeordnet werden.

Ein Verfahren zur Bereitstellung von Information im Zusammenhang mit einem Flachmetallprodukt umfasst das Bereitstellen von Information, die einer ermittelbaren Position zugeordnet ist. Das Flachmetallprodukt ist dabei an wenigstens einer Flachseite mit einem Positionscode-Muster aus einer Anordnung von verteilten Punkten versehen, wobei ein Erfassen und Decodieren wenigstens eines Teils des Positionscode-Musters die Ermittlung einer Position auf einer imaginären Oberfläche ermöglicht.

Die Information kann auf einem Server abgelegt und über eine Adressierung in Abhängigkeit von einer ermittelbaren Position über ein Netzwerk, insbesondere das Internet, abrufbar sein. Eine andere Möglichkeit besteht darin, dass die Information in einem Speicher eines Lesegerätes zum Erfassen und Decodieren wenigstens eines Teils des Positionscode-Musters abgelegt ist und über eine Adressierung in Abhängigkeit von einer ermittelbaren Position aus dem Speicher abrufbar ist.

Beispiele und Ausführungsmöglichkeiten der Erfindung werden nachfolgend unter Bezugnahme auf die Zeichnungen näher erläutert.
Figur 1A zeigt ein Beispiel eines Flachmetallprodukts in Längsschnittdarstellung.
Figur 1B zeigt ein Beispiel eines Flachmetallprodukts in Draufsicht auf die mit dem Positionscode-Muster versehene Flachseite.
Figur 2 zeigt ein Beispiel eines beschichteten Flachmetallproduktes sowie verschiedene Möglichkeiten der Realisierung eines Positionscode-Musters aus einer Anordnung von verteilten Punkten am Flachmetallprodukt.
Figur 3 zeigt ein Teil des Positionscode-Musters am Flachmetallprodukt.
Figur 4 dient zur Erläuterung eines Verfahrens zum Abruf von Information im Zusammenhang mit einem Flachmetallprodukt und/oder eines Verfahrens zur Bereitstellung von Information im Zusammenhang mit einem Flachmetallprodukt.

Begriffe wie "Aufbringen" oder "Auftragen" sowie ähnliche Begriffe (z.B. "aufgebracht" bzw. "aufgetragen") sind in dieser Beschreibung nicht so zu verstehen, dass die aufgebrachten bzw. aufgetragenen Schichten einen direkten Kontakt zu der Oberfläche, auf der sie aufgebracht bzw. aufgetragen werden, aufweisen müssen. Es können dazwischenliegende Elemente oder Schichten zwischen den "aufgebrachten" oder "aufgetragenen", Elementen oder Schichten und der darunterliegenden Oberfläche vorhanden sein. Jedoch können die oben erwähnten oder ähnliche Begriffe in dieser Offenbarung auch die spezielle Bedeutung haben, dass die Elemente oder Schichten einen direkten Kontakt zu der darunterliegenden Oberfläche haben, d.h. dass keine dazwischenliegenden Elemente oder Schichten vorhanden sind.

Der Begriff "über", der in Bezug auf ein Element oder eine Materialschicht verwendet wird, das oder die "über" einer Oberfläche gebildet oder angebracht wird, kann hier in der Bedeutung verwendet werden, dass das Element oder die Materialschicht "indirekt auf" der Oberfläche angebracht wird, wobei zwischenliegende Elemente oder Schichten zwischen der Oberfläche und dem Element oder der Materialschicht vorhanden sein können. Jedoch kann der Begriff "über" auch die spezielle Bedeutung haben, dass das Element oder die Materialschicht, die "über" einer Oberfläche aufgebracht oder aufgetragen wird, "direkt auf", d.h. z.B. in direktem Kontakt mit der betreffenden Oberfläche angebracht wird. Das Gleiche gilt analog für ähnliche Begriffe wie z.B. "darüberliegend", "unter", "darunterliegend" usw.

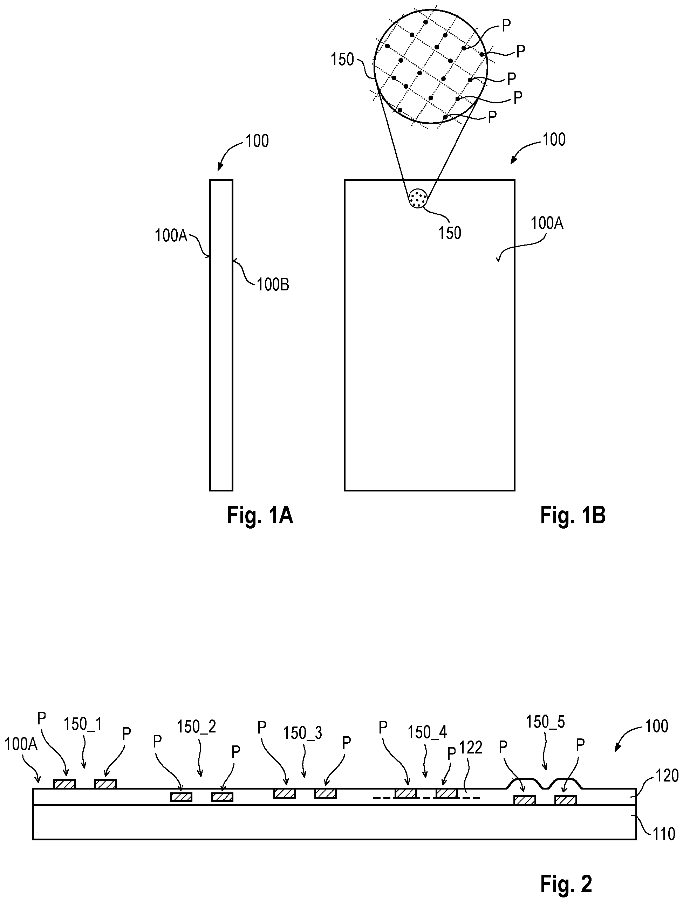

Figuren 1A und 1B zeigen ein beispielhaftes Flachmetallprodukt 100 in schematischer Längsschnittdarstellung bzw. in Draufsicht. Bei dem Flachmetallprodukt 100 kann es sich beispielsweise um ein Metallband oder einen vom Metallband abgetrennten Bandabschnitt, beispielsweise eine Metallplatine, handeln. Derartige Flachmetallprodukte sind in vielfältiger Ausführung bekannt und können in unterschiedlichsten Einsatzgebieten Anwendung finden.

Beispielsweise werden aus Metallbändern herausgetrennte Metallplatinen (zumeist Stahlplatinen) als Verkleidungen im Gebäudebereich, beispielsweise als Fassaden- oder Dachverkleidungen verwendet. Darüber hinaus finden Flachmetallprodukte 100 beispielsweise in der Hausgeräteindustrie, insbesondere der sogenannten Weißen Ware, in der Haustechnik, insbesondere Türen, Türrahmen, Leuchten, Lüftungstechnik und Elektrogehäusen sowie als Elektrobänder für den Aufbau von Elektrokernen, als Karosseriebauteile für Kraftfahrzeuge oder in vielfältigen anderen Industriebereichen, wie beispielsweise dem Bau von Pipelines, Anwendung. Ein weiters Anwendungsgebiet ist im Bereich der Lagertechnik zu finden, insbesondere für Hochregalläger.

In vielen Fällen ist es hilfreich, solche Flachmetallprodukte 100 mit Markierungen auf der Oberfläche zu versehen, über die Produktdaten und/oder weitere Informationen abrufbar sind.

Das Flachmetallprodukt 100 weist zwei Flachseiten 100A und 100B auf. Gemäß der vorliegenden Offenbarung ist das Flachmetallprodukt 100 an wenigstens einer Flachseite 100A mit einem Positionscode-Muster aus einer Anordnung von verteilten Punkten P versehen. Ein Ausschnitt eines solchen Positionscode-Musters ist in Figur 1B mit dem Bezugszeichen 150 bezeichnet und in vergrößerter Darstellung gezeigt.

Ein Positionscode-Muster 150 enthält einen oder mehrere Positionscodes. Ein Positionscode codiert eindeutig eine Position, mittels welcher (nach Decodierung) Informationen erhalten werden können, die mit dieser Position verknüpft sind. D.h., die über den Positionscode erhältlichen Informationen sind nicht direkt im Positionscode codiert, sondern sind mit der vom Positionscode codierten Position verknüpft.

Generell können unterschiedlichste Positionscodes bzw. Positionscode-Muster 150 verwendet werden, die aus einer Anordnung von verteilten Punkten aufgebaut sind. Spezielle Positionscode-Muster 150 aus einer Anordnung von verteilten Punkten werden im Folgenden noch näher beschrieben.

Das Flachmetallprodukt 100 kann mit einer Beschichtung 120 an der mit dem Positionscode-Muster 150 versehenen Flachseite 100A ausgeführt sein. Beispielsweise kann es aus einem Metallband oder einer Metallplatine 110 aufgebaut sein, über welcher die Beschichtung 120 angeordnet ist. Bei der Beschichtung 120 kann es sich beispielsweise um eine Beschichtung 120 handeln, die durch Verzinken oder Aluminieren, beispielsweise Feuerverzinken oder elektrolytisches Verzinken oder Feueraluminieren hergestellt wird. Insbesondere kann es sich bei der Beschichtung 120 um eine organische Beschichtung und/oder um ein Lacksystem handeln. Organisch beschichtete Stahlbänder sind beispielsweise unter dem Markennamen "colofer^{®}" bekannt.

Generell können verschiedene Abscheidungsverfahren, wie beispielsweise Vakuum-Abscheidungsverfahren, zur Herstellung der Beschichtung 120 eingesetzt werden. Beispielsweise lässt sich die Beschichtung 120 mit PVD (Physical Vapor Deposition), CVD (Chemical Vapor Deposition) oder Sputtern herstellen. Ferner können Tauchbeschichtungsverfahren, Galvanikverfahren, Rollenapplikationen oder Sprühverfahren eingesetzt werden.

Die Beschichtung 120 kann beispielsweise mehrlagig sein. Beispielsweise kann bei einer Lackbeschichtung eine untere Beschichtungslage aus einem chromatfreien Primer und eine obere Beschichtungslage aus einem Decklack (beispielsweise colofer^{®}-Decklack) aufgebaut sein.

Die Beschichtung 120 kann dazu dienen, dem Flachmetallprodukt (z.B. Stahlpaneel) 100 eine hohe Korrosionsbeständigkeit und UV-Beständigkeit zu verleihen. Darüber hinaus kann die Beschichtung 120 eine konstante Bewitterungs-Stabilität über die Lebensdauer des Flachmetallproduktes 100 ermöglichen, so dass dieses beispielsweise als Gebäudefassade und/oder als Dachbedeckung einsetzbar ist. Ferner kann die Beschichtung 120 z.B. an der Sichtseite des Flachmetallproduktes (bezogen auf die spätere Verwendung desselben) vorgesehen sein, d.h. beispielsweise an der für den Betrachter sichtbaren Außenseite einer als Fassade oder Dachbedeckung eingesetzten Metallplatine. Die Beschichtung 120 kann in einer Vielzahl von Farben gehalten sein. Organische Lacksysteme, wie beispielsweise colofer^{®}-Lacke, erfüllen diese Eigenschaften.

Das Positionscode-Muster 150 kann an einem beschichteten Flachmetallprodukt 100 beispielsweise auf der Beschichtung 120 aufgebracht sein (z.B. Positionscode-Muster 150_1) oder in der Beschichtung 120 realisiert sein (z.B. Positionscode-Muster 150_2). Insbesondere kann in diesem Fall das Positionscode-Muster 150 an der Oberfläche der Beschichtung 120 freiliegend sein (Positionscode-Muster 150_3) . Bei einer mehrlagigen Beschichtung 120 können die Punkte P des Positionscode-Musters 150 in der obersten Lage 122 der Beschichtung 120 (z.B. einer colofer^{®}-Beschichtung oder einer Verzinkung) vorgesehen sein (Positionscode-Muster 150_4) und beispielsweise an der Oberfläche freiliegen. Sie können auch auf der obersten Lage 122 der Beschichtung 122 aufgebracht sein (wie Positionscode-Muster 150_1). Darüber hinaus ist es auch möglich, das Positionscode-Muster 150 als Strukturmuster unterhalb der Beschichtung 120 zu realisieren (z.B. Positionscode-Muster 150_5), wobei es durch die Beschichtung 120 hindurch z.B. optisch oder auf andere Weise erfassbar ist. Im Positionscode-Muster 150_5 können die Punkte P beispielsweise als Struktur (Topographie) der Oberfläche der Beschichtung 120 realisiert sein.

Beispielsweise kann das Positionscode-Muster 150 optisch oder magnetisch oder mittels Radar- oder Röntgentechnik erfassbar sein. Die Punkte P des Positionscode-Musters 150 können beispielsweise eine andere Farbe als ihre Umgebung aufweisen, wodurch beispielsweise eine optische Erfassbarkeit ermöglicht wird.

Sofern die Punkte P des Positionscode-Musters 150 eine andere Farbe als ihre Umgebung aufweisen, kann die Farbe der Punkte P nur leicht von der Umgebungsfarbe abweichen, so dass diese Abweichung vom Betrachter kaum zu erkennen ist. Ferner ist es möglich, für die Punkte P eine infrarotsensitive Farbe oder einen Schwarzlichtlack einzusetzen, wodurch der optische Eindruck des Flachmetallprodukts 100 durch die Punkte P nicht oder nicht wesentlich verändert wird.

Zusätzlich oder alternativ können die Punkte P eine andere Reflexivität außerhalb des sichtbaren Lichtspektrums als ihre Umgebung aufweisen. Dies oder auch andere Realisierungen (beispielsweise ein magnetisches oder über Radar- oder Röntgentechnik erfassbares Positionscode-Muster 150) ermöglichen es, dass das Positionscode-Muster 150 für einen Betrachter nicht oder praktisch nicht sichtbar ist, so dass es den optischen Eindruck des Bauteils nicht oder kaum verändert.

Andererseits ist für viele Anwendungen auch ein sichtbares Punktemuster auf einer Sichtfläche kein Problem, da es das Erscheinungsbild des Flachmetallproduktes 100 gegebenenfalls sogar aufwerten kann und/oder aus der Ferne oder bei einem üblichen Betrachtungsabstand für den Betrachter nicht auflösbar ist.

In allen Fällen kann die Flachseite 100A im Wesentlichen ganzflächig mit dem Positionscode-Muster 150 versehen sein. Das heißt, das Positionscode-Muster 150 kann sich in Längs- und Querdimension kontinuierlich im Wesentlichen über die gesamte Flachseite 100A erstrecken oder es ist auch möglich, dass das Positionscode-Muster 150 aus voneinander beabstandeten Teilmusterbereichen aufgebaut ist, die verteilt über die gesamte Flachseite 100A angeordnet sind und jeweils mindestens eine Position codieren. In beiden Fällen kann das Positionscode-Muster 150 praktisch überall auf dem Flachmetallprodukt 100 erfasst und dekodiert werden. Insbesondere kann das Positionscode-Muster 150 z.B. auch auf zerkleinerten Produktteilen (z.B. Schrottschnitten) noch soweit erhalten sein, dass es erfassbar und decodierbar bleibt.

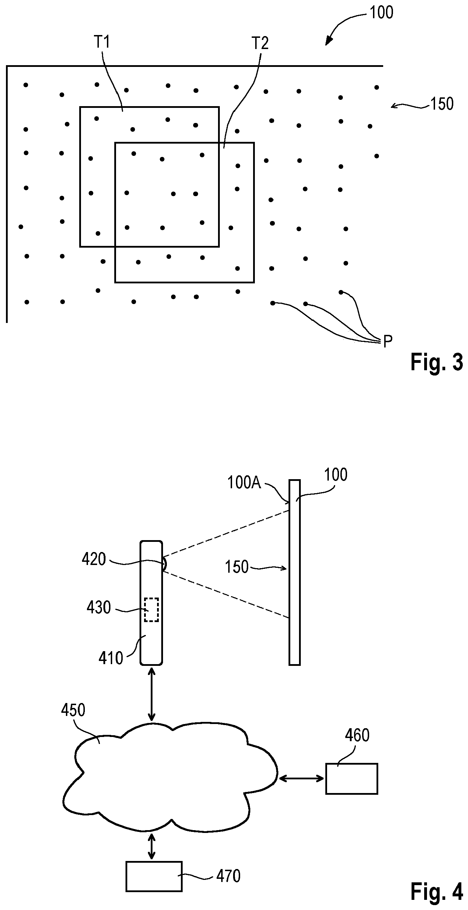

Figur 3 zeigt einen Ausschnitt des Positionscode-Musters 150 am Flachmetallprodukt 100. Die Punkte P sind in einem unregelmäßigen Raster angeordnet, d.h. die Abstände benachbarter Punkte variieren. Der vergrößerte Ausschnitt in Figur 1B verdeutlicht dies anhand eines virtuellen regelmäßigen Rasters aus punktierten Linien. Die Punkte P liegen beispielsweise niemals auf den Schnittpunkten des virtuellen Rasters, sondern um einen bestimmten Abstand entlang einer der Rasterlinien von dem Schnittpunkt verschoben. Die Verschiebung von den Schnittpunkten des virtuellen Rasters kann für alle Punkte P gleich groß sein.

Der Wert eines Punktes P hängt davon ab, wo sich der Punkt P relativ zu dem virtuellen Raster befindet. In dem hier dargestellten Beispiel gibt es vier mögliche Positionen für einen Punkt P. Somit können einem Punkt P beispielsweise vier verschiedene Werte zugeordnet werden, je nachdem entlang welcher Rasterlinie und Richtung er verschoben ist.

Figur 3 zeigt zwei verschiedene Teilflächen T1, T2 innerhalb des Positionscode-Musters 150. Die Teilflächen T1, T2 können einander beispielsweise überlappen. Jede Teilfläche T1, T2 des Positionscode-Musters 150 codiert die Koordinaten einer Position auf einer imaginären Oberfläche. Mit anderen Worten werden in diesem Beispiel 16 Punkte verwendet, um eine Position auf der imaginären Oberfläche zu codieren. D.h., durch die Variation der Abstände einer Mehrzahl benachbarter Punkte P (hier beispielsweise 16 Punkte) kann eindeutig eine Position auf der imaginären Oberfläche codiert werden. Der Positionscode bildet somit eine imaginäre Oberfläche, die durch alle Positionen des Positionscodes definiert ist, die der Positionscode codieren kann. Aufgrund der hohen Anzahl der möglichen Kombinationen von Punktrastern mit variierenden Abständen kann die imaginäre Oberfläche sehr groß sein und beispielsweise (z.B. bei einem Positionscode aus 6 × 6 Punkten und 4 Werten pro Punkt) eine Gesamtfläche aufweisen, die abhängig vom gewählten Raster mehrere Quadratkilometer, insbesondere mehrere tausend Quadratkilometer, insbesondere mehrere Millionen Quadratkilometer groß ist.

In dem in Figur 3 dargestellten Beispiel werden z.B. mindestens zwei Positionen auf der imaginären Oberfläche durch die exemplarischen Teilbereiche T1, T2 des Positionscode-Musters 150 eindeutig bestimmt (man kann leicht erkennen, dass in dem Ausschnitt wesentlich mehr Positionen codiert sein können, da viele Teilbereiche aus 16 Punkten in dem gezeigten Positionscode-Muster 150 enthalten sein können).

Ein Positionscode der oben beschriebenen Form ist aus der Schrift US 6,958,747 B2 bekannt, wobei Merkmale des dort beschriebenen beispielhaften Positionscodes durch Bezugnahme in diese Schrift aufgenommen werden. Gemäß der vorliegenden Offenbarung können jedoch auch andere Positionscode-Muster aus einer Anordnung von verteilten Punkten P verwendet werden, z.B. Positionscode-Muster, in welchen die Punkte P auf mehr als zwei virtuellen Rasterschnittlinien liegen und/oder um mehr als einen einzigen festen Abstand entlang einer der Rasterlinien verschoben sein können und/oder eine Position durch weniger als 16 Punkte codiert wird. Ferner können in anderen Beispielen die Punkte P auch gegenüber anderen virtuellen Referenzstrukturen als einem Raster, wie z.B. gegenüber einer Wabenstruktur oder einem Array aus Kreisen, verschoben sein. In allen Fällen codiert das Positionscode-Muster 150 eines Flachmetallproduktes 100 eindeutig mindestens eine Position auf der imaginären Oberfläche des Positionscodes. Anhand dieser Position und einer damit verknüpften Information (z.B. Flachmetallprodukt-ID) kann das Positionscode-Muster 150 das Flachmetallprodukt 100 eindeutig codieren.

Als nominaler Rasterabstand der Anordnung verteilter Punkte P wird der Rasterabstand des (regelmäßigen) virtuellen Rasters (siehe z.B. Figur 1B) bezeichnet. Dieser Rasterabstand kann gleich oder mehr als 0, 1 cm, 0, 5 cm, 1 cm, 2 cm oder 5 cm betragen. Damit kann der Rasterabstand deutlich größer sein als dies bei bekannten Anwendungen eines Positionscode-Musters basierend auf einem virtuellen Raster der Fall ist.

Das Positionscode-Muster 150 kann derart gewählt werden, dass jedes der Flachmetallprodukte 100 mindestens 10 × 10 Punkte P enthält. Da bei dem oben beschriebenen Beispiel eines Positionscodes aus 4 × 4 Punkten (siehe beispielsweise Teilbereich T1 bzw. Teilbereich T2) eine Position auf der imaginären Oberfläche codieren und die (unterschiedliche Positionen codierenden) Teilbereiche T1 und T2 überlappend sein können, kann durch ein Positionscode-Muster 150 aus mindestens 10 × 10 Punkten bereits eine große Anzahl von unterschiedlichen Positionen auf der imaginären Oberfläche eindeutig bestimmt sein.

Der Rasterabstand des virtuellen Rasters (der dem mittleren Abstand der Punkte P in dem Positionscode-Muster 150 entspricht) sollte so gewählt werden, dass die Punkte P mit der Auflösung eines Messsystems erfasst werden können. Darüber hinaus kann ein vergleichsweise großer Rasterabstand eine robustere Decodierung des Positionscodes anhand der erfassten Punktemuster ermöglichen. Andererseits kann bei großen Rasterabständen die Decodierung des Positionscodes ab einem gewissen Zerkleinerungsgrad des Flachmetallproduktes 100 (z.B. bei Schrottteilen) nicht mehr möglich sein.

Die Größe der Punkte P kann in etwa der Größe der Verschiebung der Punkte P vom Schnittpunkt der Linien des virtuellen Rasters entsprechen. Die Punkte P können beispielsweise eine identische Größe (z.B. identischer Durchmesser) aufweisen.

Allgemein kann in einem Positionscode aus einer Anordnung verteilter Punkte jeder Punkt einer Nominalpositionen (z.B. einem bestimmten Schnittpunkt der Linien des virtuellen Rasters) zugeordnet sein und der Wert des Punktes durch seine Lage relativ zu seiner Nominalposition bestimmt sein. Mit einem solchen Positionscode können die Koordinaten einer großen Anzahl von Positionen codiert werden. Diese Anzahl kann wesentlich größer sein als die Anzahl notwendiger Positionen (nämlich mindestens eine) auf einem einzelnen Flachmetallprodukt 100. Dabei können verschiedenen Positionen verschiedene Informationen zugeordnet werden. Redundanz kann dadurch erzeugt werden, dass verschiedenen Positionen (z.B. codiert durch Teilbereichen T1, T2) des Positionscode-Musters 150 auf einem bestimmten Flachmetallprodukt 100 dieselbe Information zugeordnet wird und/oder indem dieselbe Position mehrfach in dem Positionscode-Muster 150 eines bestimmten Flachmetallprodukts 100 codiert ist.

Offenbart ist ferner ein Verfahren zur Herstellung eines Flachmetallproduktes 100, welches es ermöglicht, Informationen im Zusammenhang mit dem Flachmetallprodukt 100 abzurufen. Das Verfahren kann die Bereitstellung des Flachmetallproduktes 100 sowie die Erzeugung eines Positionscode-Musters 150 aus einer Anordnung von verteilten Punkten P an wenigstens einer Flachseite 100A des Flachmetallproduktes 100 umfassen. Ferner kann das Verfahren optional weitere Herstellungsschritte aufweisen, wie beispielsweise das Beschichten eines Metallbandes oder einer Metallplatine 110 mit einer Beschichtung 120, wobei das Positionscode-Muster 150 beispielsweise auf, in oder unter der Beschichtung 120 realisiert sein kann (siehe z.B. Figur 2) . Dabei kann das Aufbringen der (einlagigen oder mehrlagigen) Beschichtung 120 mittels verschiedenster Verfahren und Beschichtungs-Werkstoffe durchgeführt werden, wobei zur Vermeidung von Wiederholungen auf die obigen Ausführungen Bezug genommen wird.

Figur 4 veranschaulicht ein Beispiel eines Verfahrens zum Abruf von Information im Zusammenhang mit einem Flachmetallprodukt 100, dessen Flachseite 100A mit einem Positionscode-Muster 150 aus einer Anordnung von verteilten Punkten P versehen ist.

Das Verfahren umfasst das Erfassen wenigstens eines Teils des Positionscode-Musters 150 mittels eines Lesegeräts 410. Das Lesegerät 410 kann das Positionscode-Muster 150 optisch erfassen. Beispielsweise kann hierfür eine Kamera 420 des Lesegeräts 410 eingesetzt werden.

Bei dem Lesegerät 410 kann es sich beispielsweise um ein Smartphone oder ein Tablet-Computer handeln. Es ist auch möglich, dass ein speziell für das Lesen des Positionscode-Musters 150 vorgesehenes Lesegerät 410 eingesetzt wird, beispielsweise ein Scanner für Positionscode-Muster 150. Ein solcher Scanner kann beispielsweise in einer Anlage zum Verschrotten oder Recyceln von Schrott aus Flachmetallprodukten 100 installiert sein.

Es ist auch möglich, dass das Lesegerät 410 keine optische Erfassung, sondern eine Erfassung auf anderem Wege, wie beispielsweise mittels magnetischer Felder oder mittels Röntgen- oder Radar-Strahlung vornimmt. In diesem Fall muss das Positionscode-Muster 150 so realisiert sein, dass es mittels dieser Techniken erfasst werden kann.

Im Weiteren erfolgt ein Decodieren wenigstens eines Teils des erfassten Positionscode-Musters 150 zur Ermittlung wenigstens einer Position auf einer imaginären Oberfläche. Das Decodieren kann beispielsweise mittels einer Anwendungssoftware (App) 430 ausgeführt werden, die in einem Speicher des Lesegerätes 410 gespeichert ist. Es ist auch möglich, dass die Decodierung von einer externen Vorrichtung vorgenommen wird, beispielsweise einem Computer (nicht dargestellt), mit welchem das Lesegerät 410 verbindbar ist.

Anhand der ermittelten Position oder Positionen erfolgt ein Abruf von Information, die der ermittelten Position bzw. den ermittelten Positionen zugeordnet ist. Der Informationsabruf kann beispielsweise über ein Netzwerk 450, beispielsweise das Internet, erfolgen. Die der oder den ermittelten Positionen zugeordnete Information kann auf einem Server 460 abgelegt sein und über eine Adressierung in Abhängigkeit von der oder den ermittelten Positionen über das Netzwerk 450 abgerufen werden. Die abgerufene Information kann entweder zum Lesegerät 410 transportiert oder zu einem anderen mit dem Netzwerk 450 in Verbindung stehenden Endgerät (nicht dargestellt) geleitet werden.

Die Information kann vielfältige Inhalte haben. Beispielsweise kann es sich bei der abgerufenen Information um Angaben über das Flachmetallprodukt 100 handeln, d.h. insbesondere um Produkt-Identifikationsdaten und/oder Daten zu den Materialien und/oder deren chemischen Zusammensetzungen des Flachmetallprodukts 100. Ferner können Daten des Herstellungsprozesses oder auch Logistikdaten, Einbaudaten oder Recycling-Daten des Flachmetallproduktes 100 Inhalte der Information sein. Diese und andere Informationen können beispielsweise von dem Hersteller des Flachmetallproduktes 100 und/oder einem Logistikunternehmen, das das Flachmetallprodukt 100 ausliefert und/oder einem Bauunternehmen, das das Flachmetallprodukt 100 verbaut oder abreißt und/oder verschrottet, abgerufen oder gegebenenfalls auch bereitgestellt werden.

Besondere Bedeutung kann der Positionscode bei der Kreislaufwirtschaft für die Wiederverwendung von Schrottteilen haben. Durch die eindeutigen Codierungen am Flachmetallprodukt 100 lässt sich z.B. die Stahlgüte (Zusammensetzung) des Schrottes eindeutig identifizieren und kann so ganz gezielt wieder in die Stahlerzeugung einfließen.

Ferner können Schrottkomponenten durch die Codierung eindeutig dem Stahlhersteller zuordenbar sein. Somit kann sich der Stahlhersteller beispielsweise schon beim Verkauf vertraglich den Rücklauf des Schrottes sichern.

Darüber hinaus wird ein herstellerübergreifendes Informationshandling ermöglicht, beispielsweise indem Informationen über in Flachmetallprodukten 100 (z.B. Sandwichpaneelen) verbaute Materialien jederzeit auslesbar sind und/oder Recycling-Informationen für Abriss und/oder Materialtrennung auf einfache Weise bereitgestellt und/oder abgerufen werden können.

Ferner können die Informationen auch Angaben zum Verwendungszweck und/oder zum Einsatzort des Flachmetallproduktes 100 enthalten, die beispielsweise von einem Nutzer des Flachmetallproduktes 100 (z.B. einem Kunden des Herstellers) bereitgestellt werden. Dies ermöglicht es, dass die "Informationsbereitstellungsfunktionalität" des Flachmetallproduktes 100 nicht nur vom Hersteller, sondern auch (oder auch allein) von anderen Personen genutzt werden kann.

Beispielsweise können Fassadenelemente eines Gebäudes (z.B. eines Museums) vom Nutzer des Gebäudes verwendet werden, um über die Fassadenelemente Besuchern Informationen z.B. zu dem Gebäude oder seinem Verwendungszweck oder zu Angeboten des Nutzers zugänglich zu machen. Beispielsweise könnten bei einem Museum Informationen zu den Exponaten für die Besucher abrufbar sein. Bei einem Restaurant könnte die Speisekarte abrufbar sein, usw.

Somit wird auch Verfahren zur Bereitstellung von Information im Zusammenhang mit einem Flachmetallprodukt 100 offenbart, bei welchem das Flachmetallprodukt 100 wenigstens an einer Flachseite 100A mit einem Positionscode-Muster 150 aus einer Anordnung von verteilten Punkten P versehen ist, wobei ein Erfassen und Decodieren wenigstens eines Teils des Positionscode-Musters 150 die Ermittlung einer Position auf einer imaginären Oberfläche ermöglicht. Das Verfahren umfasst das Bereitstellen von Information, die einer ermittelbaren Position zugeordnet ist. Das Bereitstellen dieser Information kann beispielsweise über einen mit dem Netzwerk 450 verbindbaren Computer 470 erfolgen, welcher die Eingabe und/oder Weiterleitung der Information an den Server 460 beispielsweise über das Netzwerk 450 ermöglicht. Der Server 460 kann dann - wie bereits beschrieben - diese Information bei einem Informationsabruf dem Interessenten zur Verfügung stellen.

## Patentansprüche

1. Flachmetallprodukt, das an wenigstens einer Flachseite (100A) mit einem Positionscode-Muster (150) aus einer Anordnung von verteilten Punkten (P) versehen ist.

2. Flachmetallprodukt nach Anspruch 1, wobei das Flachmetallprodukt (100) ein Metallband oder eine Metallplatine oder ein wenigstens eine Metallplatine und eine weitere Materiallage enthaltendes Bauteil ist.

3. Flachmetallprodukt nach Anspruch 1 oder 2, mit einer Beschichtung an der mit dem Positionscode-Muster (150) versehenen Flachseite (100A).

4. Flachmetallprodukt nach Anspruch 3, wobei das Positionscode-Muster (150) in der Beschichtung (120) realisiert ist.

5. Flachmetallprodukt nach Anspruch 3, wobei das Positionscode-Muster (150) auf die Beschichtung (120) aufgebracht ist.

6. Flachmetallprodukt nach einem der vorhergehenden Ansprüche, wobei die Punkte durch Bedrucken aufgebracht sind.

7. Flachmetallprodukt nach einem der vorhergehenden Ansprüche, wobei die Flachseite (100A) im Wesentlichen ganzflächig mit dem Positionscode-Muster (150) versehen ist.

8. Flachmetallprodukt nach einem der vorhergehenden Ansprüche, wobei die Anordnung von verteilten Punkten einen nominalen Rasterabstand von gleich oder mehr als 0, 1 cm, 0, 5 cm, 1 cm, 2 cm oder 5 cm aufweist.

9. Flachmetallprodukt nach einem der vorhergehenden Ansprüche, wobei das Positionscode-Muster (150) das Flachmetallprodukt (100) eindeutig codiert.

10. Flachmetallprodukt nach einem der vorhergehenden Ansprüche, wobei das Positionscode-Muster (150) wenigstens eine Position auf einer imaginären Oberfläche codiert.

11. Flachmetallprodukt nach Anspruch 10, wobei die Abstände benachbarter Punkte variieren und die Variation der Abstände einer Mehrzahl benachbarter Punkte eindeutig die Position auf der imaginären Oberfläche codiert.

12. Verfahren zum Abruf von Information im Zusammenhang mit einem Flachmetallprodukt (100), das an wenigstens einer Flachseite (100A) des Flachmetallproduktes (100) mit einem Positionscode-Muster (150) aus einer Anordnung von verteilten Punkten versehen ist, wobei das Verfahren umfasst:
Erfassen und Decodieren wenigstens eines Teils des Positionscode-Musters (150) zur Ermittlung einer Position auf einer imaginären Oberfläche; und
Abrufen von Information, die der ermittelten Position zugeordnet ist.

13. Verfahren nach Anspruch 12, wobei das Erfassen des wenigstens einen Teils des Positionscode-Musters (150) optisch mittels einer Kamera (420) eines Lesegerätes (410) vorgenommen wird.

14. Verfahren nach Anspruch 13, wobei das Decodieren des erfassten Teils des Positionscode-Musters (150) mittels einer Anwendungssoftware (430) des Lesegerätes (410), insbesondere eines Mobilgerätes ausgeführt wird.

15. Verfahren nach einem der Ansprüche 12 bis 14, wobei die abgerufene Information Angaben über das Flachmetallprodukt oder zum Flachmetallprodukt enthält, insbesondere Produkt-Identifikationsdaten und/oder Daten, die bei einem aus einem Metallband gefertigten Flachmetallprodukt eindeutig der ursprünglichen Position des Flachmetallproduktes im Metallband zugeordnet werden, und/oder Daten des Herstellungsprozesses, der Materialien, deren chemischen Zusammensetzungen, Logistikdaten, Einbaudaten, Daten bezüglich der Wartungshistorie, Recyclingdaten des Flachmetallprodukts (100) oder Daten zu Marketingzwecken .

16. Verfahren nach einem der Ansprüche 12 bis 15, wobei die abgerufene Information Angaben zum Verwendungszweck und/oder Einsatzort des Flachmetallproduktes (100) und/oder vom Nutzer des Flachmetallproduktes (100) bereitgestellte Information enthält.

17. Verfahren zur Bereitstellung von Information im Zusammenhang mit einem Flachmetallprodukt (100), das an wenigstens einer Flachseite (100A) des Flachmetallproduktes (100) mit einem Positionscode-Muster (150) aus einer Anordnung von verteilten Punkten versehen ist, wobei ein Erfassen und Decodieren wenigstens eines Teils des Positionscode-Musters (150) die Ermittlung einer Position auf einer imaginären Oberfläche ermöglicht, wobei das Verfahren umfasst:
Bereitstellen von Information, die einer ermittelbaren Position zugeordnet ist.

18. Verfahren nach Anspruch 17, wobei die Information
auf einem Server (460) abgelegt und über eine Adressierung in Abhängigkeit von einer ermittelbaren Position über ein Netzwerk (450), insbesondere das Internet, abrufbar ist, oder
in einem Speicher eines Lesegeräts (410) zum Erfassen und Decodieren wenigstens eines Teils des Positionscode-Musters (150) abgelegt ist und über eine Adressierung in Abhängigkeit von einer ermittelbaren Position aus dem Speicher abrufbar ist.
